Europäisches Patentamt

(19) European Patent Office

Office européen des brevets

(11) Publication number: **0 188 436**
**B1**

# EUROPEAN PATENT SPECIFICATION

(12)

(45) Date of publication of the patent specification: 01.03.89

(21) Application number: **85902174.3**

(22) Date of filing: **19.04.85**

(86) International application number: **PCT/NO 85/00023**

(87) International publication number: **WO 85/04936 (07.11.85 Gazette 85/24)**

(51) Int. Cl.⁴: **F 16 H 1/455**, F 16 D 59/00

(54) **HYDRAULIC BRAKING AND/OR LOCKING DEVICE AND INTER ALIA USE OF SAME AS DIFFERENTIAL BRAKE AND/OR LOCK.**

(30) Priority: **26.04.84 NO 841645**

(43) Date of publication of application: **30.07.86 Bulletin 86/31**

(45) Publication of the grant of the patent: **01.03.89 Bulletin 89/9**

(84) Designated Contracting States: **AT BE CH DE FR GB IT LI LU NL SE**

(56) References cited:
**DE-A- 2 148 294**
**DE-A- 2 306 110**
**DE-B- 1 172 122**
**US-A- 1 178 093**
**US-A- 1 692 801**
**US-A- 2 655 055**
**US-A- 3 158 042**
**US-A- 3 686 976**
**US-A- 4 272 993**

(73) Proprietor: **BRUUN, Arne, N-1540 Vestby (NO)**

(72) Inventor: **BRUUN, Arne, N-1540 Vestby (NO)**

(74) Representative: **Wombwell, Francis et al, Potts, Kerr & Co. 15, Hamilton Square, Birkenhead Merseyside L41 6BR (GB)**

ACTORUM AG

## Description

The present invention relates to a hydraulic braking and/or locking device and is based on the well-known gear pump brake principle. An example of a hydraulic of fluid brake employed in connection with rotating shafts, is disclosed in US Patent No 1,692,801, which reflects the preamble of claim 1.

In general a hydraulic pump uses a pair of meshing gears. A pump body cases the gears and includes channels for the inlet and outlet of oil. As the gears rotate, the spaces between the gear teeth are filled with oil from the oil inlet. Then, as the teeth mesh, the oil is squeezed out through the oil outlet.

By connecting the oil outlet to the oil inlet, a closed circuit oil system is achieved, which on being throttled, illustrates the said known hydraulic brake principle.

According to the present invention, this principle is further developed and the scope of utilization of the device is considerably extended.

Some of the expressions used in the following description, need an explanation, and will be definded here:

Internal oil leakage («bypass») – the trottled oil circulation, if any, between the oil inlet and oil outlet, and the oil leakage between the gears and their cylindrical bores. The leakage is minimised by closing the throttled connection and shaping the gears with a tight fit.

Piston gear – a gear which also can slide axially in its bore and sealingly function like a piston in a cylinder.

Piston (gear) movement – the axially sliding motion of the piston gear.

The device according to the invention is characterized in that the drive gear in the gear pump is arranged so as to be both rotable and axially slideable in its bore, like a piston in a cylinder. Moreover, connecting channels are provided from the oil outlet to one end of the cylinder and from the oil inlet to the other end of the cylinder.

When the gears begin to rotate, oil will be displaced from one side of the piston gear to the other side and the piston gear will be accordingly axially pushed by the oil pressure without the device causing any notable resistance. To support the piston movement, the teeth of the gear may be screw-shaped.

Then, as the piston gear comes into rotating contact with the cylinder end, does the braking effect occur. The braking effect is a function of the internal oil leakage («bypass») and the friction between the piston gear and the cylinder end. Said friction may be adjusted in the desired direction by the appropriate choice of materials and the conical-ness of the contact surfaces.

In this way a hydraulic braking device with braking delay is created.

By forming the contact surfaces with co-operating teeth or barbs, the piston gear rotation may be blocked and further rotation of the gears is hindered.

In this way a hydraulic locking device is created.

Below, the previously mentioned and further features of the invention and examples of employment will be explained more in detail with reference to the accompanying diagrammatic drawing, wherein:

Fig. 1 shows a section of the device with the slideable piston gear in its mid-position.

Fig. 2 shows a section of the device where the contact surfaces are formed with co-operating teeth.

Fig. 3 shows a section of the device where the slideable piston gear is held in its initial position due to ists own weight.

Fig. 4 shows a section of the device where the contact surfaces are formed with hypoid-shaped teeth.

Fig. 5 and 6 shows the device placed with clearance between the side gears in a differential with the pump drive gear coupled to one of the planetary gears.

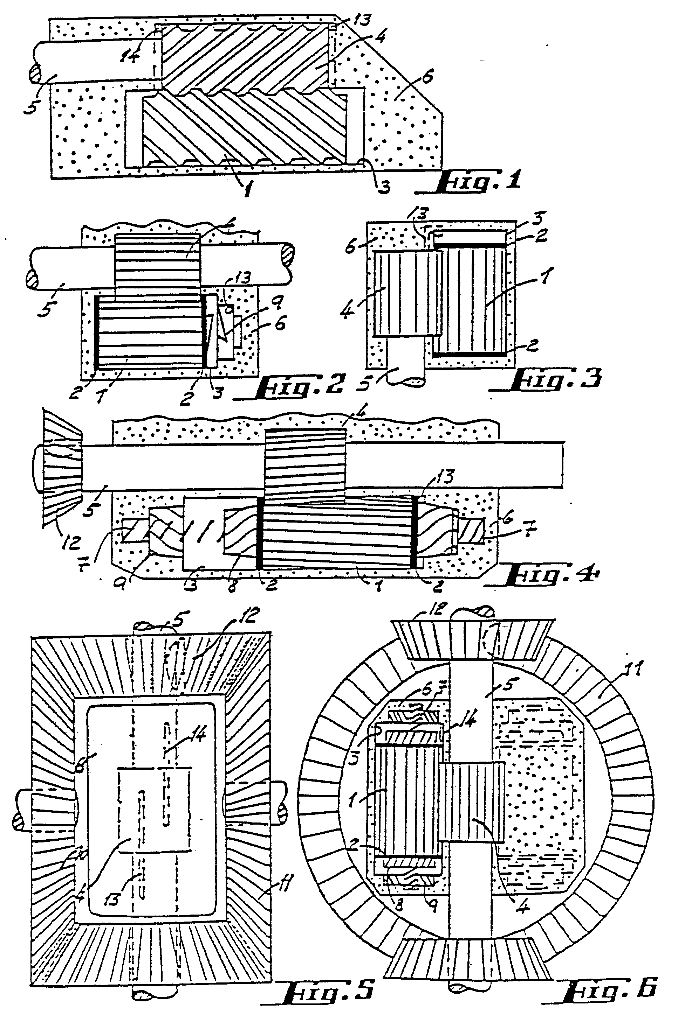

In fig. 1–6 the pump driven gear 1 (piston gear) is axially moveable. The piston gear is supplied with end discs 2 wich seal against the wall 3 of the cylinder. The drive gear 4 is coupled to an axle shaft 5 which extends out of the pump body 6. The two gears 1 and 4 are meshed with another and the pump body cavity is filled with oil and sealed off from its surroundings. A channel 13 leads from the pump oil inlet to one end of the cylinder and another channel 14 leads from the pump oil outlet to the other end of the cylinder. When the gears rotate, oil is sucked from one end of the cylinder and forced into the other end of the cylinder. If the direction of rotation of the gears is reversed, the oil is pumped in the opposite direction.

In fig. 1 the piston gear 1 can move freely, in fig. 2, 4 and 6 it is held in its initial position by springs 7 and in fig. 3 it is held in its initial position by its own weight.

The magnitude of the braking delay is dependent on the lenght of the piston stroke. If, for example, a journal is to be put into rotation with a long light runnig period, the piston stroke is made long. If the braking effect is to come into play immediately, a short piston stroke is set.

Utilisation of springs 7 holding the piston gears in its initial position, makes it possible to have a gentle transition from the light running state to the braking state. When a journal is to be put into rotation, the piston gear is in its initial position, i. e. at the beginning of the light running phase. During the piston axial movement, the spring is gradually put under tension and the braking effect increases accordingly.

By forming the contact surfaces of the piston end and pump body with co-operating teeth 8, 9, the rotation of the piston gear will be blocked when it makes contact with the pump body. In fig. 2 the teeth 8 and 9 are undercut-shaped, in fig. 4 hypoid-shaped and in fig. 6 spiral-shaped.

One actual use of the device is in connection with car seatbelts. The embodiment of the device shown in fig. 2 is particularly suited to this purpose. The body 6 is designed as a seat-belt drum, the piston stroke is reduced to a minimum, and the piston end and the body are supplied with self-locking meshing teeth. In this way the device 'block rapidly when the seat-belt is jerked. The oil «bypass» is adapted so that the seat-belt is rewound at a desired speed.

Another actual use of the device is in those connections where it is desired that ropes, chains, belts etc. is to be paid out at a controlled speed, e.g. in rescue services in connection with fire-ropes and chains, rescue baskets, lifeboats etc. In this case the design shown in fig. 1 is well suited. The body 6 is preferably designed as a drum or pulley, the piston stroke and spring tension, if any, are adapted so that the desired acceleration is achieved and the oil «bypass» is adjusted so that the desired speed is obtained.

The design shown in fig. 1 is also well suited in connection with the opening and closing of heavy gates. The device is coupled to the gate revolving hinge pin, and the braking delay is adjusted so that the braking effect comes into play when the gate approaches its open position. When the gate is being closed the braking effect will then come into play when the gate approaches the closed position.

The design shown in fig. 3 is useable as a speed regulator for a rotating member.

One area of use where all the functions of the device can be utilised, is particularly in connection with the differential of a vehicle, i.e. as a differential brake or combined differential brake and lock.

The general objection to and disadvantage of using an automatic differential brake based on the gear pump brake principle, e.g. as disclosed in US Patent 4,272,993 is that this type of brake offer braking effect all the time, for example during driving in turns where the braking effect is undesireable. Thus, undue wear and tear and overheating and steering trouble occur. By using a device based on the present invention however, the said disadvantages are prevented since, because of its constructional design (the moving piston) the device has a braking delay, i.e. a delay which means that the braking effect does not come into play, unless one wheel has less traction than the other.

In fig. 5 and 6 is shown how the device can be placed. The body 6 of the device is fitted with play in the space between the differential side gears 10 and 11, and the planetary gears 12. Positioned in this space (like hand in glove) the device will remain fairly firm. The pump axle shaft 5 extending out on both sides of the pump body is supported in the differential case (not shown in the drawing). The planetary gears are monted on the axle shaft 5, one of the planetary gears fixed and the other one moving freely.

Example A

As a differential brake an embodiment of the the device as shown in fig. 1 is suitable. The device is equipped with springs which are preferably pretensioned and preferably positioned with particular play in relation to the piston gear. The throttled connection between the pump inlet and outlet is dispensed with so that the inlet and outlet are only connected to their respective sides of the piston gear 1. The differential brake functions in the following manner:

Normal state:

During normal straight-road driving, the ring gear with the differential case (not shown in the drawing) will rotate, but the planetary gears 12 will remain rotation-less about their own axis, i.e. the pump gears will also remain at rest.

Delay phase:

In a turn the outermost wheel will rotate faster than the innermost and the planetary gears 12 rotate slowly. The pump gears 1 and 4 is driven by one of the planetary gears, but by this normal slow rotation the piston gear 1 moves freely and the device does not offer braking resistance.

Transitional phase:

However, if one of the wheels loses traction, i.e. begins to slip, the planetary gears 12 will rotate faster. Now the piston gear is pushed by the oil pressure more and more over to the one side against a correspondingly increasing spring tension. The braking effect of the device increases correspondingly and this effect is transmitted to the wheel with traction.

Braking phase:

If one of the wheel is spinning freely, the rotation of the planetary gears 12 will increase further, the spring 7 tension will be overcome, and the piston gear 1 comes into rotating contact with the cylinder end in the pump body. The braking effect is now depending on the internal oil leakage and the friction between the piston and the pump body. The device works as an differential brake.

Return phase:

In cases where both wheels get traction, the oil pressure decreases gradually and the spring 7 will push the piston gear back to its initial position.

Re-cycle:

If the slipping or spinning wheel should get traction and the other wheel begin to slip or spin, then the rotation of the gears in the pump will be reversed and the gear piston will be pushed by the oil pressure to the opposite side in the pump body and the cycle will be repeated.

Example B

As a combined differential brake and lock an embodiment of the device as shown in fig. 4 or 6 is utilised and it functions in the following manner:

Normal state:

Corresponds to the normal state as described in example A.

Delay phase:

Corresponds to the delay phase as described in example A.

Transitional phase:

Corresponds to the transitional phase as described in example A.

Locking state:

If free spinning occurs, however, the piston gear will be moved into locking engagement with the co-operating teeth in the pump body and lock itself. In this way the planetary gears have their rotation hindered and the device now works as an differential lock.

Return phase:

Corresponds to the return phase as described in example A.

Re-cycle:

Corresponds to the re-cycle as described in example A.

The embodiment of the device as described and shown may be modified in many ways; for example, the locking teeth may be replaced by a hub coupling. Furthermore, the piston and cylinder may be designed so that the internal oil leakage may be altered in accordance with the displacement of the piston away from the initial position, for example by giving the cylinder a slightly conical design. Moreover, the number of gears in the pump may be increased and other forms of gear utilised. In addition the piston gear may be held in its initial position by aids of magnets.

## Claims

1. A hydraulic braking and/or locking device, comprising a fluid gear pump with a closed-circuit oil system, where the pump body (6) comprises a pair of bores (3), each of which contains a gear (1 and 4), of which a first driven gear (1) is rotably meshed with a second drive gear (4) fixed to an axle shaft (5) which extends out of the pump body (6); and where the braking effect of the device, eg transmitted to a rotating journal, is depending on the throttling of the oil circuit, characterized in that the first driven gear (1), at the same time as it is meshed with the second drive gear (4), is arranged axially slideable, like a piston, in its bore (3), and that the oil inlet and the oil outlet are connected to a respective end of the bore (3).

2. A device as defined in claim 1, characterized by means for holding the piston in its initial position, eg springs (7), the weight of the piston gear (fig. 3).

3. A device as defined in claim 1 or 2, characterized by means which hinder further rotation of the gears, when the piston gear (4) makes contact with one of the cylinder ends, eg by forming the contact surfaces with co-operating teeth, lugs, barbs (8, 9).

4. A device as defined in claim 3, characterized by means (8, 9) wich hinders further rotation of the gears, when the piston gear (1) makes contact with any one end of the cylinder.

5. Use of the device as defined in claim 1 or 2 as a drum brake, pulley brake, eg for ropes, chains, belts.

6. Use of the device as defined in claim 3 as a drum lock, pulley lock, eg for a self-winding car seatbelt.

7. Use of the device as defined in claim 1 and 2 as a differential brake, or as defined in claim 4 as a combined differential brake/lock for a vehicle, by coupling one of the differential planetary gears (12) to the device; for example by fitting the device with play in the space between the differential side gears (10, 11) and the planetary gears (12), with the axle shaft (5) of the device extending out of the pump body at both sides and replacing the planetary gear shaft in the differential case, one of the planetary gears being fixed to and the other rotating freely on the axle shaft (5); and coordinating the internal oil leakage «bypass», the piston gear (1) stroke and the spring tension, so that when the vehicle is being driven with tractive wheels, the device is inactive, when slipping occurs the device offers gradually increasing braking effect and when spinning take place the device acts as a differential brake/lock.

## Patentansprüche

1. Hydraulische Brems- bzw. Sperrvorrichtung, bestehend aus einer Flüssigkeits-Getriebe-Pumpe mit geschlossenem Druckmittel-Kreislauf, in deren Gehäuse ein Paar Bohrungen (3) zur Aufnahme jeweils eines Getrieberades (1 und 4) vorgesehen ist, die miteinander in Eingriff stehen und von denen das eine Getrieberad (4) an einer sich durch das Gehäuse (6) nach außen erstreckenden Welle (5) befestigt ist, wobei die beispielsweise auf einen Wellenstumpf ausgeübte Bremswirkung der Vorrichtung von der Drosselung des Flüssigkeitsumlaufes abhängig ist, dadurch gekennzeichnet, daß das eine Getrieberad (1) in der Eingriffsstellung mit dem zweiten Getrieberad (4) in seiner Bohrung (3) nach Art eines Kolbens axial-verschieblich gelagert ist und der Flüssigkeitseinlaß und der Flüssigkeitsauslaß der Pumpe mit jeweils einem Ende der betreffenden Bohrung verbunden ist.

2. Vorrichtung nach Anspruch 1, dadurch gekennzeichnet, daß Mittel, beispielsweise Federn (7) oder das Gewicht des Kolbenrades (Fig. 3), vorgesehen sind, mit deren Hilfe der Kolben in seiner Ausgangsstellung gehalten wird.

3. Vorrichtung nach Anspruch 1 oder 2, dadurch gekennzeichnet, daß Mittel, beispielsweise miteinander zusammenwirkende Zähne, vorspringende Nocken oder Nasen (8, 9) in den Kontaktflächen, vorgesehen sind, mit deren Hilfe die weitere Drehung des Kolbenrades (4) beim Anschlag an einem der Zylinderenden verhindert wird.

4. Vorrichtung nach Anspruch 3, dadurch gekennzeichnet, daß Mittel (8, 9) vorgesehen sind, mit deren Hilfe die weitere Drehung des Kolbenrades (1) beim Anschlag an einem der Zylinderenden verhindert wird.

5. Verwendung der Vorrichtung gemäß Anspruch 1 als Bremse für Trommeln bzw. Seil-, Ketten- oder Riemenscheiben.

6. Verwendung der Vorrichtung nach Anspruch 3 als Sperre für Trommeln oder Scheiben von beispielsweise selbstwickelnden Sicherheitsgurten von Kraftfahrzeugen.

7. Verwendung der Vorrichtung nach Anspruch 1 und 2 als Differential-Bremse oder nach Anspruch 4 als kombinierte Differential-Brems/Sperrvorrichtung für Kraftfahrzeuge durch beispielsweise Anordnung mit Spiel in dem Raum zwischen dem seitlichen Tellerrad (10, 11) und den Planetenrädern (12) eines Differential-Planetengetriebes derart, daß sich die Welle (5) beidseitig durch das Pumpengehäuse hindurch nach außen erstreckt und die Getriebewelle bildet, auf der das eine Planetenrad starr befestigt und das andere Planetenrad frei drehbar gelagert ist, wobei die innere Drosselbohrung, der Hub des Kolbenrades (1) und die Federspannung derart aufeinander abgestimmt sind, daß die Vorrichtung bei Kraftübertragung auf die Antriebsräder unwirksam ist, bei Auftreten von Schlupf zunehmende Bremswirkung ausübt und bei Durchdrehen der Räder als Differentialbremse bzw. Differentialsperre wirkt.

**Revendications**

1. Dispositif de freinage et/ou de blocage hydraulique, comportant une pompe hydraulique à engrenages et un réseau d'huile en circuit fermé, dans lequel le corps de pompe (6) présente deux alésages (3) dont chacun contient un engrenage (1 et 4), parmi lesquels un premier engrenage mené (1) engrène en rotation avec un second engrenage. menant (4) fixé à un arbre primaire (5) qui s'étend hors du corps de pompe (6), et dans lequel l'action de freinage du dispositif, transmise par exemple à un tourillon tournant, dépend de l'étranglement du circuit d'huile, caractérisé en ce que le premier engrenage mené (1) est, en même temps qu'il engrène avec le second engrenage menant (4), disposé pour coulisser en direction axiale dans son alésage (3), comme un piston, et en ce que l'entrée d'huile et la sortie d'huile sont reliées à une extrémité correspondante de l'alésage (3).

2. Dispositif selon la revendication 1, caractérisé par des moyens pour maintenir le piston dans sa position initiale, par exemple des ressorts (7) ou le poids de l'engrenage formant piston (fig. 3).

3. Dispositif selon la revendication 1 ou 2, caractérisé par des moyens qui empêchent toute nouvelle rotation des engrenages quand l'engrenage formant piston (1) vient en contact avec l'une des extrémités du cylindre, par exemple en constituant les surfaces de contact avec des dents coopérantes, des tétons ou des barbilles (8, 9).

4. Dispositif selon la revendication 3, caractérisé par des moyens (8, 9) qui empêchent toute nouvelle rotation des engrenages quand l'engrenage formant piston (1) vient en contact avec l'une quelconque des extrémités du cylindre.

5. Utilisation du dispositif selon la revendication 1 ou 2 en tant que frein à tambour, frein à poulie, par exemple pour des câbles, des chaînes, des courroies.

6. Utilisation du dispositif selon la revendication 3 en tant que dispositif de blocage de tambour, dispositif de blocage de poulie, par exemple pour une ceinture à enrouleur de siège d'automobile.

7. Utilisation du dispositif selon la revendication 1 et la revendication 2 en tant que frein différentiel, ou selon la revendication 4 en tant que dispositif différentiel combiné de freinage et de blocage pour un véhicule, en accouplant avec le dispositif l'un des engrenages satellites (12) du différentiel, par exemple en constituant le dispositif avec du jeu dans l'intervalle entre les engrenages latéraux (10, 11) du différentiel et les engrenages satellites (12), l'arbre primaire (5) du dispositif sortant du corps de pompe des deux côtés et remplaçant l'arbre des engrenages satellites dans le carter du différentiel, l'un des engrenages satellites étant fixé sur l'arbre primaire (5) et l'autre engrenage satellite tournant librement sur cet arbre, et en coordonnant le «by-pass» interne de fuite d'huile, la course de l'engrenage (1) formant piston et la contrainte du ressort, de manière que quand le véhicule est entraîné par des roues agissant en traction, le dispositif soit inactif, que quand il y a patinage le dispositif exerce une action de freinage croissante et que quand il y a dérapage le dispositif agisse comme un dispositif differentiel de freinage et de blocage.

Fig. 1

Fig. 2

Fig. 3

Fig. 4

Fig. 5

Fig. 6